# FASCICULE DE BREVET EUROPEEN

(11) **EP 1 431 179 B1**
(45) Date de publication et mention de la délivrance du brevet: **14.05.2008**
(21) Numéro de dépôt: 03300269.2
(22) Date de dépôt: 17.12.2003
(51) Int. Cl.: B64F 1/12

(54) **Dispositif d'amarrage d'un aéronef**
Flugzeugankereinrichtung
Aircraft anchoring apparatus

(30) Priorité: 17.12.2002 FR 0216070
(43) Date de publication de la demande: 23.06.2004
(73) Titulaire: Societe Technique d'Etudes, Realisations et Maintenances Energetiques, 17180 Perigny (FR)
(72) Inventeur: Rodier, Bernard, 17220 Saint Rogatien (FR); Cusseau, Bruno, 17170 La Greve sur Mignon (FR)
(74) Mandataire: Fantin, Laurent

(56) Documents cités:
- EP-A- 0 893 607
- US-A- 4 553 391
- US-A- 5 292 089

## Description

La présente invention se rapporte à un dispositif d'amarrage pour aéronef.

Pour éviter le déplacement d'un aéronef en cas de forts vents, son train avant est amarré à l'aide d'au moins une sangle à au moins un anneau ancré au sol. Aussi, les zones de stationnement des aéronefs comportent au niveau du sol des anneaux affleurants sans débordement en position horizontale.

US-A-5,292,089 décrit un dispositif d'amarrage qui comporte les caractéristiques du préambule de la revendication 1.

Pour réaliser un amarrage, une première technique consiste à prévoir au moins une sangle dont la première extrémité est solidarisée à un anneau au sol et la seconde extrémité à un point d'ancrage de l'aéronef. Pour obtenir un amarrage efficace, il est préférable d'utiliser deux sangles qui sont reliées à l'aéronef de manière symétrique afin de mieux répartir les efforts. Une seconde technique consiste à prévoir une seule sangle dont les extrémités sont solidarisées à deux anneaux au sol, disposés de manière symétrique par rapport au train avant, la sangle passant par un point d'ancrage de l'aéronef. Cette solution a pour avantage de répartir de manière symétrique les efforts et de ne nécessiter qu'une seule sangle.

Par ailleurs, l'amarrage de l'avion peut être également nécessaire au moment du chargement et déchargement de l'avion afin d'éviter son basculement vers l'arrière. Dans ce cas, l'amarrage est réalisé au niveau du train avant.

Ces techniques d'amarrage ne sont pas satisfaisantes pour les raisons suivantes.

Même si les sangles peuvent comprendre des dispositifs de tension tel qu'un tendeur à cliquet, la tension est statique et prévue pour un état de l'aéronef. Or, lors de son chargement ou déchargement, la suspension du train avant se comprime ou se détend en fonction de la charge. En cas de détente, si la ou les sangles étaient déjà tendues, la tension supplémentaire en raison de l'élévation de l'aéronef peut engendrer la détérioration de l'amarrage. En cas de compression, la ou les sangles qui étaient préalablement tendues sont détendues en raison de l'abaissement de l'aéronef et libres de leurs mouvements, rendant inefficace l'amarrage.

Aussi, la présente invention vise à pallier les inconvénients des dispositifs d'amarrage d'aéronef existants en proposant un nouveau dispositif procurant un amarrage efficace dans le temps malgré les changements de postures de l'aéronef.

A cet effet, l'invention a pour objet un dispositif d'amarrage destiné notamment à un aéronef, comportant au moins une sangle ou analogue assurant la liaison entre un point d'ancrage de l'aéronef et le sol, qui comprend des moyens de contrôle dynamique de la tension de la sangle en fonction des variations de la distance entre le point d'ancrage de l'aéronef et le sol. Cet agencement permet d'avoir une sangle toujours en tension malgré les variations de charge du dispositif de suspension, lors du chargement ou du déchargement de l'aéronef.

Avantageusement, le dispositif est susceptible d'occuper deux états, un premier état dit libre dans lequel il est susceptible de suivre les variations de la distance entre le point d'ancrage de l'aéronef et le sol, en autorisant l'allongement ou le raccourcissement de la sangle, et un second état dit bloqué, dans lequel il s'oppose au dévidage de la sangle. Selon une autre caractéristique, le dispositif comprend des moyens susceptibles de mesurer la vitesse de dévidage de la sangle, ledit dispositif passant de l'état libre à l'état bloqué lorsque la vitesse de dévidage dépasse un certain seuil ou subit une forte accélération.

Cet agencement permet de limiter les risques de basculement de l'aéronef vers l'arrière ou son déplacement lors d'un fort coup de vent.

D'autres caractéristiques et avantages ressortiront de la description qui va suivre de l'invention, description donnée à titre d'exemple uniquement, en regard des dessins annexés sur lesquels:
- la figure 1 est une vue en élévation latérale d'un aéronef,
- la figure 2 est une vue illustrant le dispositif d'amarrage du train avant de l'aéronef,
- la figure 3 est une vue de détail illustrant un mode de réalisation d'un dispositif de contrôle dynamique de la tension de la sangle selon l'invention, et
- la figure 4 est un schéma illustrant les circuits fluidiques du dispositif de la figure 3.

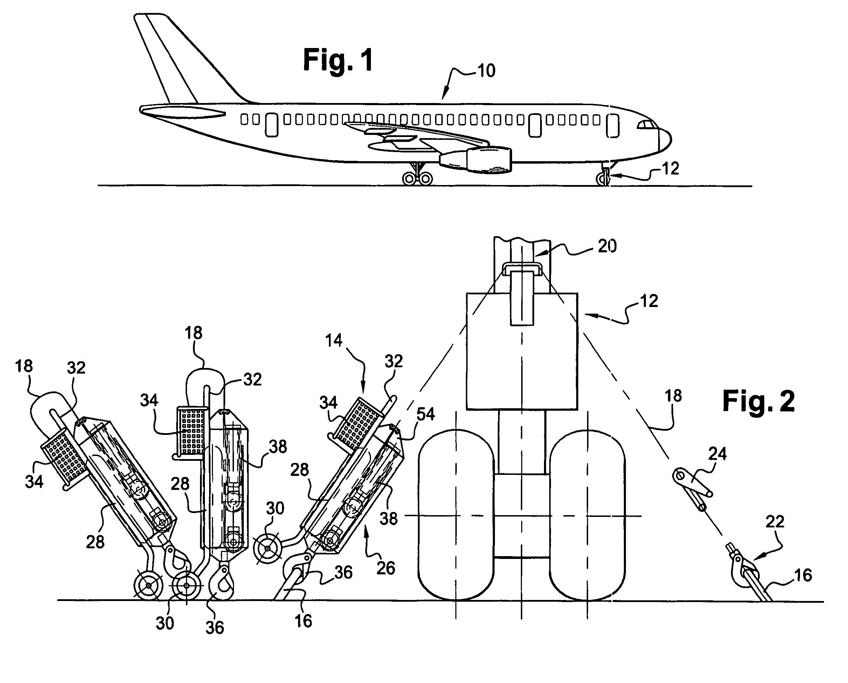

Sur la figure 1, on a représenté en 10 un aéronef comportant notamment un train avant 12 représenté en détail sur la figure 2.

Afin d'immobiliser l'aéronef 10 et/ou d'éviter son basculement vers l'arrière lors du chargement ou déchargement, la partie supérieure du train avant 12 disposée au-dessus de la suspension (non représentée) et solidaire du corps de l'aéronef est reliée au sol à l'aide d'un dispositif d'amarrage 14.

Un ou des anneaux 16 dit d'ancrage sont prévus au niveau du sol afin de permettre un ancrage plus aisé. Ces anneaux sont de préférence affleurants en position horizontale et disposés de chaque côté du train avant 12 de manière à obtenir une répartition symétrique des efforts dus à l'amarrage.

Selon les techniques utilisées, le dispositif d'amarrage 14 comprend une ou plusieurs sangles 18 reliant la partie supérieure du train avant au sol. Selon un mode de réalisation préféré et illustré par la figure 2, le dispositif d'arrimage comprend une sangle 18 dont les extrémités sont reliées aux anneaux d'ancrage 16, ladite sangle passant par un anneau ou ouverture 20, appelé point d'ancrage de l'aéronef, prévu en partie supérieure du train avant. En variante, on pourrait prévoir deux sangles 18, chacune ayant une première extrémité reliée au point d'ancrage de l'aéronef et une seconde extrémité reliée au sol.

Pour permettre une solidarisation aisée, la ou les sangles comprennent à leurs extrémités des crochets 22, de préférence avec un linguet ou sous forme d'un mousqueton.

La ou les sangles 18 ont une longueur adéquate, et sont réalisées en matériaux appropriés pour permettre la reprise des efforts. De plus, une sangle peut être réalisée d'un seul tenant ou à partir de plusieurs éléments disposés bout à bout. Enfin, la sangle peut avoir des formes de section différentes, lesdites sections étant constituées d'un seul élément ou de plusieurs éléments disposés parallèlement ou toronnés.

De manière connue, la sangle peut être équipée ou non de moyens de tension 24 statique tel qu'un tendeur à cliquet.

Selon l'invention, le dispositif d'amarrage 14 comprend des moyens 26 de contrôle de la tension d'une sangle 18 de manière dynamique, susceptible s d'ajuster le dévidement de la sangle 18 en fonction de la ou des variations de la distance séparant le point d'ancrage 20 de l'aéronef au point d'ancrage au sol 16.

Selon un mode de réalisation préféré et illustré par la figure 2, le dispositif d'amarrage 14 comprend un chariot 28, avec de préférence en partie inférieure des roulettes 30 et en partie supérieure une poignée 32 facilitant son déplacement, et une sangle 18 reliée à une première extrémité au chariot 28 et comportant à l'autre extrémité un crochet 22, un tendeur à cliquet 24 étant de préférence prévu au niveau de la sangle. Avantageusement, le chariot 28 comprend des moyens 34 de stockage de la sangle qui peuvent ou non permettre le rembobinage automatique de ladite sangle 18.

En partie inférieure, le chariot 28 comprend des moyens de solidarisation au sol sous forme par exemple d'un crochet 36 permettant la solidarisation du chariot et donc de la sangle 18 à un anneau d'ancrage.

En variante, le chariot 28 peut être relié à plusieurs sangles 18.

Selon l'invention, le dispositif 26 de contrôle dynamique de la tension d'une sangle 18 est disposé au niveau du chariot 28. Ce dispositif 26 permet d'ajuster de manière automatique au cours du temps la longueur de la sangle 18, lorsque la distance séparant le point d'ancrage 20 de l'aéronef et le point d'ancrage au sol varie, notamment lors du chargement ou déchargement de l'aéronef.

Avantageusement, ce dispositif 26 comprend des moyens susceptibles de mesurer la vitesse de dévidage de la sangle 18. Ainsi, dès que la vitesse de dévidage dépasse un certain seuil ou subit une forte accélération, notamment lorsque l'aéronef tend à basculer vers l'arrière ou lors d'un coup de vent, le dispositif s'oppose au dévidage de la sangle afin de maintenir une longueur constante entre le point d'ancrage 20 de l'aéronef et le point d'ancrage au sol 16.

Le dispositif 26 de contrôle dynamique de la tension d'une sangle comprend des moyens 38 qui tendent à tendre la sangle 18, lesdits moyens 38 étant susceptibles d'occuper deux états, un premier état dit libre dans lequel ils sont susceptibles de suivre les variations de distance entre le point d'ancrage 20 de l'aéronef et le point d'ancrage 16 au sol, en exerçant sur la sangle 18 une tension sensiblement constante et en autorisant l'allongement ou le raccourcissement de la sangle, et un second état dit bloqué, dans lequel ils s'opposent au dévidage de la sangle.

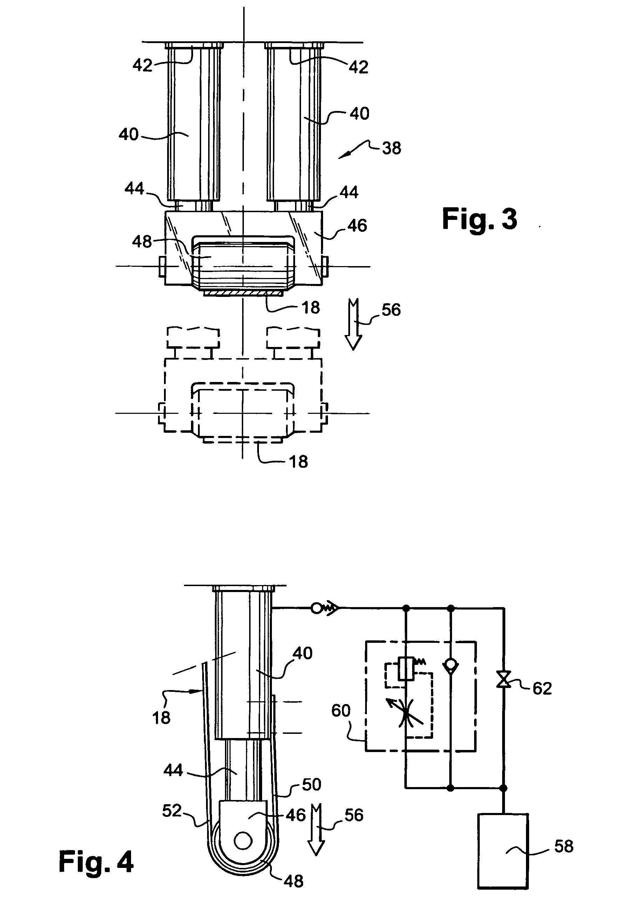

Selon un mode de réalisation préféré et illustré par les figures 3 et 4, les moyens 38 se présentent sous la forme d'un vérin 40 simple effet, ou de préférence deux vérins, dont la base 42 du corps est reliée à la partie supérieure du chariot 28 et dont le piston 44 orienté vers le bas comprend au niveau de son extrémité une chape 46 supportant un galet ou rouleau 48 susceptible d'appliquer une tension à la sangle 18 dont le premier brin 50 a son extrémité reliée à la partie supérieure du chariot 28 et le second brin 52 se dévide par une ouverture 54 ménagée également en partie supérieure du chariot 28. Le ou les vérins 40 sont à simple effet et tendent à tendre la sangle 18, comme illustré par la flèche 56. Ainsi, pour une course de X mm du piston 44, on obtient une variation de la longueur de la sangle de 2X mm. Sur la figure 3, on a représenté l'ensemble dans deux positions différentes, pistons comprimés et détendus.

Comme illustré sur la figure 4, le ou les vérins 40 sont reliés à un réservoir 58 de fluide de manière à assurer une tension permanente réglable de la sangle 18, notamment lorsque la distance entre le point d'ancrage 20 de l'aéronef et le point d'ancrage au sol diminue.

Un régulateur de débit unidirectionnel 60, prévu entre le ou les vérins 40 et le réservoir 58, assure la fonction d'amortisseur au dévidage de la sangle 18 et autorise la compression du ou des vérins 40, notamment lorsque la distance entre le point d'ancrage 20 de l'aéronef et le point d'ancrage 16 au sol augmente. Ce régulateur 60 permet également de contrôler la vitesse de dévidage de la sangle 18. Ainsi, dès que la vitesse dépasse un certain seuil ou subit une forte accélération, le régulateur s'oppose à l'écoulement du fluide entre le ou les vérins 40 et le réservoir 58, si bien que le ou lesdits vérins 40 sont à l'état bloqués et s'opposent au dévidage de la sangle 18.

Une vanne 62 dite by-pass peut être prévue en parallèle du régulateur 60 pour relier le ou les vérins 40 au réservoir 58.

La mise en oeuvre du dispositif de l'invention est maintenant décrite.

Le chariot 28 est déplacé près du train avant 12 et son crochet 36 est accroché à un anneau d'ancrage 16. Ensuite, l'opérateur passe la sangle 18 par le point d'ancrage 20 de l'aéronef et accroche le crochet 22 à un second anneau 16 d'ancrage. Il exerce une tension sur la sangle 18 à l'aide du tendeur à cliquet 24 de manière à disposer les moyens de tension 38 dans un état approprié. Si l'aéronef est chargé et que l'amortisseur du train avant doit se détendre, les moyens de tension 38 ne seront presque pas comprimés. Au contraire, si l'aéronef doit être chargé et que l'amortisseur du train avant doit se comprimer, les moyens de tension seront comprimés afin de pouvoir exercer une tension sur la sangle.

Lors de l'accrochage et du réglage de la tension, l'échappement du ou des vérins est libre, la vanne 62 est ouverte. Après, en fonctionnement, l'échappement du ou des vérins est contrôlé , la vanne 62 est fermée.

Selon une autre caractéristique de l'invention, une information visuelle peut être prévue pour permettre un réglage de la tension au moment de l'amarrage correct.

## Revendications

1. Dispositif d'amarrage destiné notamment à un aéronef, comportant au moins une sangle (18) ou analogue assurant la liaison entre un point d'ancrage (20) de l'aéronef et le sol, **caractérisé en ce qu**'il comprend des moyens (26) de contrôle dynamique de la tension de la sangle (18) en fonction des variations de la distance séparant le point d'ancrage (20) de l'aéronef au sol, susceptible s d'occuper deux états, un premier état dit libre dans lequel ils sont susceptibles de suivre les variations de distance entre le point d'ancrage (20) de l'aéronef et le sol en autorisant l'allongement ou le raccourcissement de la sangle (18), et un second état dit bloqué, dans lequel ils s'opposent au dévidage de la sangle (18) lorsque la vitesse de dévidage dépasse un certain seuil ou subit une forte accélération.

2. Dispositif selon la revendication 1, **caractérisé en ce qu**'il comprend des moyens susceptibles de mesurer la vitesse de dévidage de la sangle (18).

3. Dispositif selon la revendication 1 ou 2, **caractérisé en ce que** les moyens (26) dynamique de contrôle de la tension de la sangle (18) comprennent des moyens (38) qui tendent à tendre la sangle (18).

4. Dispositif selon la revendication 3, **caractérisé en ce que** les moyens (38) se présentent sous la forme d'au moins un vérin (40) simple effet dont le piston (44) est orienté de manière à ce que des moyens presseurs (46, 48) disposés à son extrémité appliquent une tension sur la sangle (18).

5. Dispositif selon la revendication 4, **caractérisé en ce qu**' il comprend un régulateur de débit (60) au niveau de l'échappement du ou des vérins (40), assurant la fonction d'amortisseur au dévidage de la sangle (18) et permettant de contrôler la vitesse de dévidage de ladite sangle (18).

6. Dispositif selon la revendication 4 ou 5, **caractérisé en ce que** les moyens (26) de contrôle dynamique de la tension sont disposés dans un chariot (28), le piston (44) tendant à se déplacer vers le bas de manière à appliquer une tension sur la sangle (18) dont un des brin s (52) se dévide par une ouverture (54) ménagée en partie supérieure du chariot (28).

7. Dispositif selon la revendication 6, **caractérisé en ce que** le chariot (28) comprend des moyens de solidarisation au sol.

8. Dispositif selon l'une quelconque des revendication 1 à 7, **caractérisé en ce qu'**il comprend des moyens de ré embobinage automatique de la sangle (18).

## Claims

1. An anchoring device intended for an aircraft, comprising at least one strap (18) or the like providing the connection between the anchoring point (20) on the aircraft and the ground, **characterised in that** it comprises means (26) for dynamically controlling the tension on the strap (18) according to variations in the distance separating the anchoring point (20) on the aircraft on the ground, able to occupy two states, a first so-called free state in which they are able to follow the variations in distance between the anchoring point (20) of the aircraft and the ground by allowing extension or shortening of the strap (18), and a second so-called locked state in which they oppose the paying-out of the strap (18) when the paying-out speed exceeds a certain threshold or undergoes high acceleration.

2. A device according to claim 1, **characterised in that** it comprises means able to measure the paying-out speed of the strap (18).

3. A device according to claim 1 or 2, **characterised in that** the means (26) for dynamic control of the tension of the strap (18) comprise means (38) that tend to tension the strap (18).

4. A device according to claim 3, **characterised in that** the means (38) are in the form of at least one single-acting jack (40), the piston (44) of which is oriented so that pressing means (46, 48) disposed at its end apply a tension to the strap (18).

5. A device according to claim 4, **characterised in that** it comprises a flow-rate regulator (60) at the exhaust of the jack or jacks (40), fulfilling the function of damper for the paying-out of the strap (18) and making it possible to control the paying-out speed of said strap (18).

6. A device according to claim 4 or 5, **characterised in that** the means (26) for dynamic control of the tension is disposed in a carriage (28), the piston (44) tending to move downwards so as to apply tension to the strap (18), one of the lengths (52) of which is paid-out through an opening (54) provided at the top part of the carriage (26).

7. A device according to claim 6, **characterised in that** the carriage (28) comprises means for fixing to the ground.

8. A device according to any one of claims 1 to 7, **characterised in that** it comprises means for automatic re-reeling of the strap (18).

## Patentansprüche

1. Abspannvorrichtung, insbesondere für ein Luftfahrzeug, umfassend mindestens einen Gurt (18) oder dgl. zur Verbindung zwischen einem Verankerungspunkt (20) des Luftfahrzeugs und dem Boden, **dadurch gekennzeichnet, dass** sie Mittel (26) umfasst zur dynamischen Steuerung der Spannung des Gurts (18) in Abhängigkeit von Veränderungen des den Verankerungspunkt (20) des Luftfahrzeugs vom Boden trennenden Abstands, wobei diese Mittel zwei Zustände einnehmen können, einen so genannten freien ersten Zustand, in welchem sie den Abstandsänderungen zwischen dem Verankerungspunkt (20) des Luftfahrzeugs und dem Boden **dadurch** nachgeben können, dass sie eine Verlängerung bzw. Verkürzung des Gurtes (18) zulassen, und einen so genannten sperrenden zweiten Zustand, in welchem sie sich gegen ein Abrollen des Gurtes (18) sperren, wenn die Abrollgeschwindigkeit einen bestimmten Schwellwert überschreitet oder stark ansteigt.

2. Vorrichtung nach Anspruch 1, **dadurch gekennzeichnet, dass** sie Mittel umfasst, mit denen die Abrollgeschwindigkeit des Gurtes (18) messbar ist.

3. Vorrichtung nach Anspruch 1 oder 2, **dadurch gekennzeichnet, dass** die Mittel (26) zur dynamischen Steuerung der Spannung des Gurts (18) Mittel (38) umfassen, die dazu neigen, den Gurt (18) zu spannen.

4. Vorrichtung nach Anspruch 3, **dadurch gekennzeichnet, dass** die Mittel (38) die Form mindestens eines einfach wirkenden Zylinders (40) aufweisen, dessen Kolben (44) derart ausgerichtet ist, dass an seinem Ende angeordnete Anpressmittel (46, 48) eine Spannung auf den Gurt (18) ausüben.

5. Vorrichtung nach Anspruch 4, **dadurch gekennzeichnet, dass** sie im Bereich des Auslasses des Zylinders bzw. der Zylinder (40) einen Durchflussregler (60) umfasst, der beim Abrollen des Gurtes (18) als Dämpfer wirkt und die Steuerung der Abrollgeschwindigkeit des Gurtes (18) ermöglicht.

6. Vorrichtung nach Anspruch 4 oder 5, **dadurch gekennzeichnet, dass** die Mittel (26) zur dynamischen Steuerung der Spannung in einem Schlitten (28) angeordnet sind, wobei der Kolben (44) dazu neigt, sich derart nach unten zu verschieben, dass eine Spannung auf den Gurt (18) ausgeübt wird, dessen einer Strang (52) über eine im oberen Teil des Schlittens (28) vorgesehene Öffnung (54) abgespult wird.

7. Vorrichtung nach Anspruch 6, **dadurch gekennzeichnet, dass** der Schlitten (28) Mittel zur Befestigung am Boden umfasst.

8. Vorrichtung nach einem der Ansprüche 1 bis 7, **dadurch gekennzeichnet, dass** sie Mittel zum automatischen Aufrollen des Gurtes (18) umfasst.
